# FASCICULE DE BREVET EUROPEEN

(11) **EP 3 644 725 B1**
(45) Date de publication et mention de la délivrance du brevet: **15.11.2023**
(21) Numéro de dépôt: 18734232.4
(22) Date de dépôt: 27.06.2018
(51) Int. Cl.: A01M 13/00, A01M 17/00, A23B 7/144, A23L 3/3409

(54) **ENSEMBLE ET PROCÉDÉ DE TRAITEMENT, ENSEMBLE DE STOCKAGE ET DE CULTURE DE PRODUITS VÉGÉTAUX COMPORTANT L'ENSEMBLE DE TRAITEMENT**
BEHANDLUNGSEINHEIT UND -VERFAHREN, EINHEIT ZUM AUFBEWAHREN UND KULTIVIEREN VON PFLANZENPRODUKTEN MIT DER BEHANDLUNGSEINHEIT
TREATMENT UNIT AND METHOD, UNIT FOR STORING AND CULTURING PLANT PRODUCTS COMPRISING THE TREATMENT UNIT

(30) Priorité: 28.06.2017 FR 1755964
(43) Date de publication de la demande: 06.05.2020
(73) Titulaire: Xeda International S.A., 13670 Saint Andiol (FR)
(72) Inventeur: SARDO, Alberto, 13160 Chateaurenard (FR); SARDO, Stefano, 13160 Chateaurenard (FR); PAITEL, Laura, 84130 Le Pontet (FR)
(74) Mandataire: Lavoix
(86) Numéro de dépôt international: PCT/EP2018/067320
(87) Numéro de publication internationale: WO 2019/002405

(56) Documents cités:
- EP-A1- 0 775 441
- US-A1- 2002 062 593
- US-A1- 2012 328 749
- Anonymous: "Pyrethrin - Wikipedia", , 3 mai 2017 (2017-05-03), XP055451947, Extrait de l'Internet: URL:https://en.wikipedia.org/w/index.php?t itle=Pyrethrin&oldid=778428330 [extrait le 2018-02-16]
- Wilkening Axel: "PSM-Zulassungsbericht (Registration Report)", , 11 September 2013 (2013-09-11), pages 1-36, XP093051978, Retrieved from the Internet: URL:https://www.zkbs-online.de/SharedDocs/ Downloads/04_Pflanzenschutzmittel/01_zulas sungsberichte/006423-00-00.pdf?__blob=publ icationFile&v=2 [retrieved on 2023-06-06]

## Description

L'invention concerne en général l'évaporation de produits biocides ou phytoprotecteurs volatiles.

Il est possible d'évaporer de tels produits dans une tour d'évaporation contenant un garnissage. Un flux d'air ascendant est créé dans la tour. Le liquide à évaporer est injecté au-dessus du garnissage, et s'écoule par gravité vers le bas. Il est collecté en pied de la tour, sous le garnissage, et recirculé. Le flux d'air circule dans le garnissage au contact du liquide, celui-ci étant évaporé et entraîné avec le flux d'air.

Un tel procédé est connu de la demande déposée sous le numéro FR 1655717.

Le dispositif et le procédé décrit dans ce document fonctionnent très bien quand le liquide est un produit pur.

En revanche, quand le liquide comprend en mélange plusieurs produits, les produits les plus volatiles sont évaporés préférentiellement. La composition du liquide se modifie avec le temps, le liquide s'enrichissant en produits lourds, et s'appauvrissant en produits très volatiles.

Ainsi, pour des liquides contenant une pluralité de produits tels que des huiles essentielles, la composition du flux d'air chargé en produits de traitement se modifie avec le temps.

Dans ce contexte, l'invention vise à proposer selon un premier aspect un ensemble de traitement qui ne présente pas le défaut ci-dessus. Document US2002/062593 décrit un autre dispositif dans lequel un liquide imprègne un matériau à grande surface spécifique. Ce liquide est un composé du groupe des pyréthroïde, par example une pyréthrine naturelle ou une pyréthroïde synthétique.

A cette fin, l'invention porte sur un ensemble de traitement, l'ensemble comprenant :
- un dispositif d'évaporation comportant un conduit de circulation de gaz, et un matériau à grande surface spécifique remplissant une section d'évaporation du conduit de circulation;
- un dispositif de mise en circulation du gaz à travers le conduit de circulation ;
- un liquide imprégnant le matériau à grande surface spécifique, le liquide contenant au moins un produit ou un mélange de produits biocides et/ou phytoprotecteurs volatiles, de température d'ébullition comprise entre 130 et 280°C à pression atmosphérique, le matériau à grande surface spécifique ayant une capacité de rétention de liquide supérieure à 50 l/m³ de matériau à grande surface spécifique à 20°C ;
- un dispositif de rechargement, agencé pour réimprégner le matériau à grande surface spécifique en liquide ou pour remplacer le matériau à grande surface spécifique épuisé avec un nouveau matériau à grande surface spécifique imprégné de liquide.

L'ensemble de traitement met en oeuvre un matériau à grande surface spécifique ayant une grande capacité de rétention pour le liquide à évaporer. La surface de contact obtenue entre le liquide et le gaz est extrêmement élevée. Il est ainsi possible d'évaporer des quantités importantes de liquide, avec un flux de gaz de débit modéré.

En particulier, il est possible de pratiquement saturer le flux de gaz avec la vapeur de liquide.

Du fait de la capacité de rétention du matériau à grande surface spécifique, il n'est pas nécessaire de recirculer en permanence le liquide. Quand le matériau à grande surface spécifique est partiellement ou totalement épuisé en liquide, le dispositif de rechargement permet de réimprégner le matériau à grande surface spécifique avec du liquide frais.

Ainsi, le phénomène d'appauvrissement du liquide en produits très volatiles observé avec l'ensemble de traitement de FR 1655717 n'intervient plus ou est strictement limité. Du fait que le matériau à grande surface spécifique est rechargé périodiquement en liquide frais, ayant la composition d'origine, la composition de la vapeur évaporée est constante, ou évolue dans une fourchette de composition étroite.

L'ensemble peut également présenter une ou plusieurs des caractéristiques ci-dessous, considérées individuellement ou selon toutes les combinaisons techniquement possibles :
- au moins un des produits est choisi dans la liste de produits phytoprotecteurs ou biocides suivantes :
   huile essentielle ; terpène ; alcool à chaîne courte de C6 à C10 saturé ou insaturé, comme par exemple l'octanol, le 2-éthylhexanol ; produit de synthèse volatile, comme par exemple l'hexanal, le 1,4-diméthylnaphtalène et le 3-décène-2-one ; acides organiques liquides à point d'ébullition élevé, tels que l'acide pélargonique et l'acide parabénique ; esters avec activité biocide comme par exemple l'isovalérianate d'isoamyle ;
- le dispositif d'évaporation est une tour d'axe vertical, la section d'évaporation étant d'axe vertical et ayant de préférence une section horizontale inférieure à 75% de la section horizontale de la tour ;
- le dispositif d'évaporation est un tuyau définissant le conduit de circulation des gaz ;
- le matériau à grande surface spécifique est une mousse à cellules ouvertes ou est en un matériau minéral divisé tel que la vermiculite ou la perlite ;
- le matériau à grande surface spécifique est agencé en au moins deux couches disposées l'une au-dessus de l'autre et séparées l'une de l'autre par un espace, chaque couche ayant une épaisseur inférieure à une limite prédéterminée, par exemple 100 mm ;
- le dispositif de rechargement comprend un bac rempli de liquide, et un mécanisme agencé pour extraire le matériau à grande surface spécifique de la section d'évaporation du conduit de circulation, le plonger dans le bac et le remettre en place dans la section d'évaporation du conduit de circulation ;
- le bac est placé dans la tour, la section d'évaporation étant délimitée entre le bac et la paroi de la tour ;
- le dispositif de rechargement comprend un appareil de nébulisation, injectant le liquide sous forme de gouttelettes dans le gaz en amont du matériau à grande surface spécifique, de préférence à une température inférieure à 50°C ;
- le dispositif de rechargement comprend une réserve contenant du liquide, un distributeur de liquide, et un organe de circulation de liquide aspirant le liquide dans la réserve et refoulant le liquide dans le distributeur de liquide, le distributeur de liquide étant agencé pour projeter le liquide sur ou dans le matériau à grande surface spécifique ;
- le dispositif de rechargement comprend des organes agencés pour monter la section d'évaporation de manière réversible dans le conduit de circulation.

Selon un second aspect, l'invention porte sur un procédé de traitement, le procédé comprenant les étapes suivantes :
- mise en circulation d'un gaz à travers un conduit de circulation, un matériau à grande surface spécifique remplissant une section d'évaporation du conduit de circulation, un liquide imprégnant le matériau à grande surface spécifique, le liquide contenant au moins un produit ou un mélange de produits biocides et/ou phytoprotecteurs volatiles, de température d'ébullition comprise entre 130 et 280°C à pression atmosphérique, le matériau à grande surface spécifique ayant une capacité de rétention de liquide supérieure à 50 l/m³ de matériau à grande surface spécifique à 20°C;
- quand le matériau à grande surface spécifique est épuisé en liquide, rechargement par réimprégnation du matériau à grande surface spécifique en liquide ou remplacement du matériau à grande surface spécifique épuisé par un nouveau matériau à grande surface spécifique imprégné de liquide.

Le procédé peut en outre présenter une ou plusieurs des caractéristiques ci-dessous, considérées individuellement ou selon toutes les combinaisons techniquement possibles :
- le matériau à grande surface spécifique est une mousse à cellules ouvertes ou est en un matériau minéral divisé tel que la vermiculite ou la perlite ;
- la réimprégnation du matériau à grande surface spécifique est effectuée en plongeant le matériau à grande surface spécifique dans un bac contenant du liquide ;
- le conduit de passage est ménagé dans une tour d'axe vertical, le bac étant placé dans la tour, la section d'évaporation du conduit de passage étant délimitée entre le bac et la paroi de la tour ;
- la réimprégnation du matériau à grande surface spécifique est effectuée en injectant le liquide sous forme de gouttelettes dans le gaz en amont du matériau à grande surface spécifique, de préférence à une température inférieure à 50°C ;
- la réimprégnation du matériau à grande surface spécifique est effectuée en projetant du liquide sur ou dans le matériau à grande surface spécifique, à partir d'une réserve de liquide ;
- le rechargement est effectué en démontant la section d'évaporation contenant le matériau à grande surface spécifique épuisé, en remplaçant le matériau à grande surface spécifique épuisé par un nouveau matériau à grande surface spécifique imprégné de liquide, et remontant la section d'évaporation contenant un nouveau matériau à grande surface spécifique imprégné de liquide ;
- le rechargement est effectué en démontant la section d'évaporation contenant le matériau à grande surface spécifique épuisé, et en remontant une nouvelle la section d'évaporation contenant un nouveau matériau à grande surface spécifique imprégné de liquide ;
- le gaz chargé en liquide vaporisé sortant du conduit de circulation est injecté dans un local contenant des produits végétaux.

Selon un troisième aspect, l'invention porte sur un ensemble de stockage ou de culture de produits végétaux comprenant :
- un local contenant des produits végétaux ;
- un ensemble de traitement ayant les caractéristiques ci-dessus, le conduit de circulation de gaz étant raccordé fluidiquement au volume interne du local.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée d'un ensemble de stockage de produits végétaux équipé d'un ensemble de traitement selon un premier mode de réalisation de l'invention ;
- les figures 2 et 3 sont des vues similaires à celles de la figure 1, illustrant l'étape de rechargement par réimprégnation du matériau à grande surface spécifique en liquide pour le premier mode de réalisation de l'invention ;
- la figure 4 illustre une variante du premier mode de réalisation de l'invention dans laquelle l'ensemble de traitement comporte un lavage des gaz, avant passage à travers le matériau à grande surface spécifique ;
- la figure 5 est une vue similaire à celle de la figure 1, illustrant un second mode de réalisation de l'invention ;
- la figure 6 illustre un troisième mode de réalisation de l'invention, le local contenant les produits végétaux étant un silo ;
- la figure 7 est une vue similaire à celle de la figure 6, illustrant un quatrième mode de réalisation de l'invention ;
- la figure 8 est une vue similaire à celle de la figure 1, illustrant une variante du premier mode de réalisation de l'invention ;
- la figure 9 est une vue similaire à celle de la figure1, illustrant encore une autre variante du premier mode de réalisation de l'invention. L'ensemble de stockage ou de culture de produits végétaux 1 représenté sur la figure 1 comprend un local 3 et un ensemble de traitement 5. L'ensemble de traitement 5 est configuré pour évaporer un liquide contenant au moins un produit biocide et/ou phytoprotecteur volatile et pour injecter le liquide évaporé dans l'atmosphère interne du local 3.

Le traitement est un traitement de désinfection et/ou un traitement phytoprotecteur.

Par exemple, le local est sensiblement étanche à l'air. Le local est une enceinte fermée, au sens où les échanges entre l'atmosphère du local et l'extérieur, notamment les échanges gazeux, sont réduits, de manière par exemple à ne pas mettre en péril la conservation des produits végétaux qui y seraient stockés.

En variante, le local est équipé d'une ventilation permanente.

Dans le cas d'un traitement de désinfection, le local est par exemple un stockage destiné aux produits végétaux, mais ne contenant pas de produits végétaux au moment du traitement. En variante, le local est une partie d'un hôpital, d'une école, d'une installation industrielle, ou tout autre type de local. Le local peut encore être une cuve, une citerne de stockage ou de transport, ou n'importe quel autre type d'enceinte à désinfecter.

Dans le cas d'un traitement phytoprotecteur, le local est par exemple une chambre, une serre, ou tout local destiné au stockage de produits végétaux tels que des grains de céréales, des fruits ou des légumes. Le traitement est appliqué pendant que les produits végétaux sont stockés dans le local. En variante, il est appliqué pendant que le local 3 est vide.

Quand le produit est un produit biocide, le traitement vise à assainir le local 3.

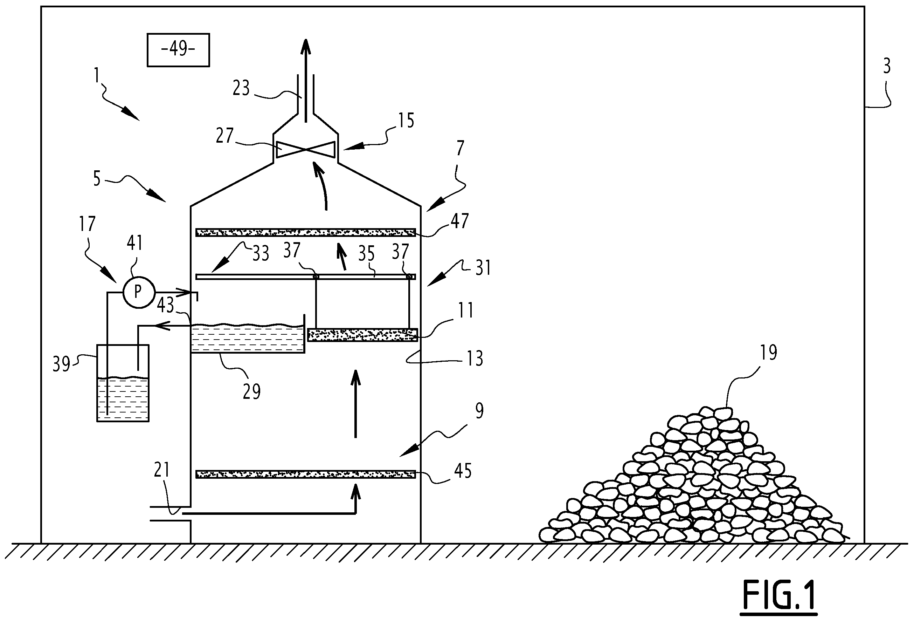

Quand le produit est un produit phytoprotecteur, qui peut aussi être appelé produit phytosanitaire, le traitement vise à protéger les produits végétaux 19 (voir figure 1), en empêchant le développement de maladies et/ou de pourritures, et en éliminant les insectes, champignons et parasites.

L'ensemble de traitement 5 comprend un dispositif d'évaporation 7 pourvu d'un conduit de circulation de gaz 9, et d'un matériau à grande surface spécifique 11 remplissant une section 13 du conduit de circulation 9. L'ensemble 5 comporte également un dispositif 15 de mise en circulation du gaz à travers le conduit de circulation 9. L'ensemble de traitement 5 comporte encore du liquide imprégnant le matériau à grande surface spécifique, ce liquide contenant au moins un produit ou un mélange de produits biocides et/ou phytoprotecteurs volatiles, comme indiqué ci-dessus.

L'ensemble 5 comporte encore un dispositif de rechargement 17, agencé pour réimprégner le matériau à grande surface spécifique 11 en liquide ou pour remplacer le matériau à grande surface spécifique 11 épuisé avec un nouveau matériau à grande surface spécifique 11 imprégné de liquide.

L'ensemble de traitement 5 est placé à l'extérieur du local 3 ou à l'intérieur. Le gaz est typiquement l'air atmosphérique aspiré à l'extérieur du local 3. En variante, le gaz est l'atmosphère interne du local 3.

Le liquide ne contient que des produits biocides, ou que des produits phytoprotecteurs, ou encore comprend un ou plusieurs produits biocides mélangés à un ou plusieurs produits phytoprotecteurs.

Au moins un des produits est choisi dans la liste suivante : huiles essentielles ; terpènes ; alcools de C6 à C10 saturés ou insaturés, comme par exemple l'octanol, le 2-éthyl hexanol ; les produits de synthèse volatiles, comme par exemple l'hexanal, le 1,4 diméthylnaphtalène et le 3-décène-2-one ; les acides organiques liquides à point d'ébullition élevé, tels que l'acide pélargonique et l'acide parabénique ; les esters avec activité biocide, comme par exemple l'isovalérianate d'isoamyl.

L'huile essentielle est par exemple choisie dans le groupe formé par l'huile de menthe, l'huile de girofle, l'huile de rose, l'huile de thym, l'huile d'origan, l'huile d'eucalyptus, l'huile de pin, l'huile de cannelle. En variante, le liquide comprend l'un des constituants de ces huiles, choisi dans l'ensemble formé par la L-carvone, l'eugénol, le géraniol, le thymol, le carvacrol, l'eucalyptol, le pinène, le cinnamaldéhyde.

Chaque produit biocide et/ou phytoprotecteur présente typiquement une tension de vapeur comprise entre 0,01 mm Hg et 3 mm Hg, c'est-à-dire entre 1,3 et 400 Pa, à 20°C.

Typiquement, le liquide comprend seulement le ou les produits, sans solvant ni adjuvant. En variante, le liquide comporte un solvant aqueux ou organique, dans lequel est dissous le ou les produits et un ou plusieurs adjuvants. Le solvant aqueux est par exemple de l'eau. Le solvant organique est par exemple un solvant du type décrit dans FR 2 791 910 ou des glycols, diglycols et leurs esters relatifs. Les adjuvants sont par exemple des substances aptes à véhiculer la ou les matières actives ou aptes à donner un effet de dilution.

Le ou chaque produit a une température d'ébullition comprise entre 130 et 280°C à pression atmosphérique.

Le matériau à grande surface spécifique 11 est agencé de manière à remplir entièrement la section 13, de telle sorte que les gaz circulant dans le conduit de circulation 9 soient forcés de passer à travers le matériau à grande surface spécifique 11.

Le matériau à grande surface spécifique 11 est choisi de manière à avoir une capacité de rétention de liquide importante. Il est choisi en fonction de la nature du liquide à évaporer.

Le matériau a une grande surface par unité de volume, c'est-à-dire une surface spécifique importante et possède donc une capacité de rétention de liquide supérieure à 10 l/m³ à 20°C. De préférence, la capacité de rétention est supérieure à 50 l/m³ et encore de préférence 100 l/m³.

Avantageusement, le matériau à grande surface spécifique 11 est une mousse à cellules ouvertes. La mousse est une éponge, ou une mousse de matériau plastique. Par exemple, le matériau à grande surface spécifique est une mousse de polyuréthane à cellules ouvertes, avec une densité comprise entre 10 et 40 kg/m³, encore de préférence comprise entre 20 et 30 kg/m³, et par exemple une densité de 25 kg/m³.

En variante, le matériau à grande surface spécifique 11 est en un matériau minéral divisé, par exemple sous forme de petits granulés, tel que la vermiculite ou la perlite. Par exemple, le matériau à grande surface spécifique 11 se présente sous la forme de perles de vermiculite ayant un diamètre compris entre 0,5 et 5 mm, de préférence compris entre 0,5 et 2 mm, et valant par exemple 1 mm.

Selon un autre aspect, le matériau à grande surface spécifique offre une surface par volume extrêmement importante. Par exemple, le matériau à grande surface spécifique 11 présente une surface par volume comprise entre 1000 et 100 000 m²/m³.

Quand le matériau à grande surface spécifique 11 est une mousse à cellules ouvertes, il présente une surface par volume comprise entre 5 000 et 60 000 m²/m³, de préférence comprise entre 10 000 et 40 000 m²/m³, et valant par exemple 30 000 m²/m³.

Quand le matériau à grande surface spécifique se présente sous la forme de petits granulés d'un matériau minéral, sa surface par volume est typiquement comprise entre 1000 et 10 000 m²/m³, de préférence comprise entre 2000 et 6000 m²/m³, et vaut par exemple 3500 m²/m³.

Dans le mode de réalisation de la figure 1, le dispositif d'évaporation 7 est une tour d'axe vertical. Le conduit de circulation 9 est également d'axe vertical. Il correspond au volume interne de la tour. La section d'évaporation 13 est aussi d'axe vertical.

Le dispositif de circulation 15 est agencé pour créer une circulation ascendante du gaz à l'intérieur de la tour.

Pour ce faire, le dispositif d'évaporation 5 comporte une ou plusieurs entrées 21 par lesquelles le gaz pénètre dans le dispositif d'évaporation 5, sous le matériau à grande surface spécifique 11. Les entrées 21 débouchent par exemple dans l'atmosphère externe.

Le dispositif d'évaporation 5 comporte encore une sortie 23 pour le gaz chargé en liquide évaporé, placée en partie supérieure de la tour. La sortie 23 est située au-dessus du matériau à grande surface spécifique 11.

Quand le dispositif d'évaporation est placé dans le local 3, la sortie 23 débouche directement dans le volume interne du local 3 (voir figures 1 à 5, 8 et 9).

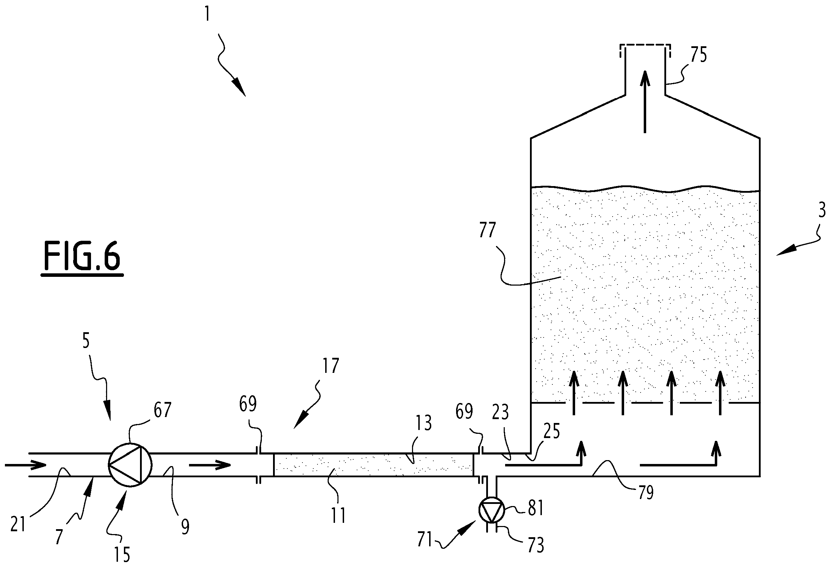

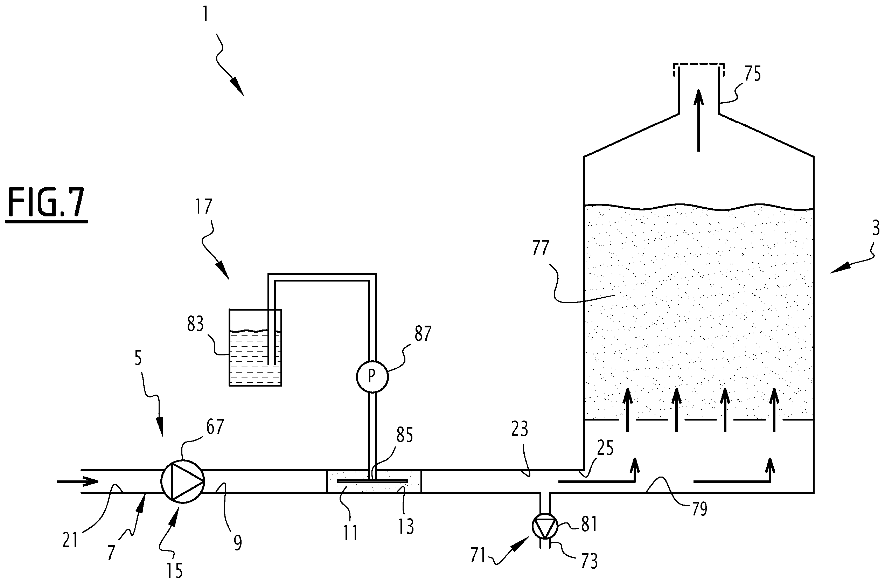

Quand le dispositif d'évaporation est placé à l'extérieur du local 3, la sortie 23 est raccordée fluidiquement au volume interne du local 3 par un conduit de transfert 25 (figures 6 et 7).

Le dispositif de circulation 15 comprend par exemple un organe de circulation 27, tel qu'un ventilateur ou une soufflante, placé au-dessus du matériau à grande surface spécifique 11, typiquement au sommet de la tour. L'organe de circulation 27 est agencé pour aspirer le gaz chargé en liquide évaporé au-dessus du garnissage, et pour le refouler dans ou vers la sortie 23.

Ainsi, le conduit de circulation de gaz 9 s'étend depuis l'entrée jusqu'à la sortie à l'intérieur de la tour.

Quand le matériau à grande surface spécifique 11 est une mousse à cellules ouvertes, il se présente sous la forme d'une plaque, de forme correspondant sensiblement à la section interne de la section d'évaporation 13, et d'épaisseur sensiblement constante.

Typiquement, l'épaisseur est comprise entre 30 et 50 mm.

Quand le matériau à grande surface spécifique 11 est en un matériau minéral tel que des perles de vermiculite, le matériau à grande surface spécifique se présente sous la forme de granulés de 1 à 5 mm de diamètre.

Le dispositif de rechargement 17 comprend typiquement un bac 29 rempli de liquide, et un mécanisme 31 agencé pour extraire le matériau à grande surface spécifique 11 de la section 13 du conduit de circulation, le plonger dans le bac 29, et le remettre en place dans la section d'évaporation 13 du conduit de circulation 9.

Le bac 29 est avantageusement placé à l'intérieur de la tour. Il est typiquement ouvert vers le haut, de manière à permettre l'introduction du matériau à grande surface spécifique 11 dans le bac.

Avantageusement, la section d'évaporation 13 du conduit de circulation 9 est délimitée entre le bac 29 et la paroi de la tour.

Un tel agencement présente plusieurs avantages.

Le transfert du matériau à grande surface spécifique 11 depuis la section d'évaporation jusque dans le bac 29 est facilité.

Par ailleurs, la section d'évaporation 13 constitue un rétrécissement dans le conduit de circulation 9, de telle sorte que la vitesse de passage du gaz à travers la section d'évaporation et à travers le matériau à grande surface spécifique 11 est plus élevée qu'en d'autres parties de la tour. Ceci est favorable pour l'évaporation du liquide.

La section d'évaporation 13 présente ainsi une section horizontale réduite, inférieure à 75% de la section horizontale de la tour, de préférence sensiblement égale à 50% de la section horizontale de la tour. Le bac 29, présente alors lui aussi une section sensiblement égale à 50% de la section horizontale de la tour.La concordance entre les sections respectives du matériau à grande surface spécifique et du bac permet un trempage plus facile du matériau à grande surface spécifique dans le bac.

Typiquement, la section horizontale du bac 29 est légèrement supérieure à la section horizontale du matériau à grande surface spécifique 11.

La tour présente typiquement une section rectangulaire, prise dans un plan horizontal. Par exemple, elle présente une largeur égale à deux fois sa longueur. Le bac 29 et la section d'évaporation 13 sont juxtaposés selon la largeur de la tour.

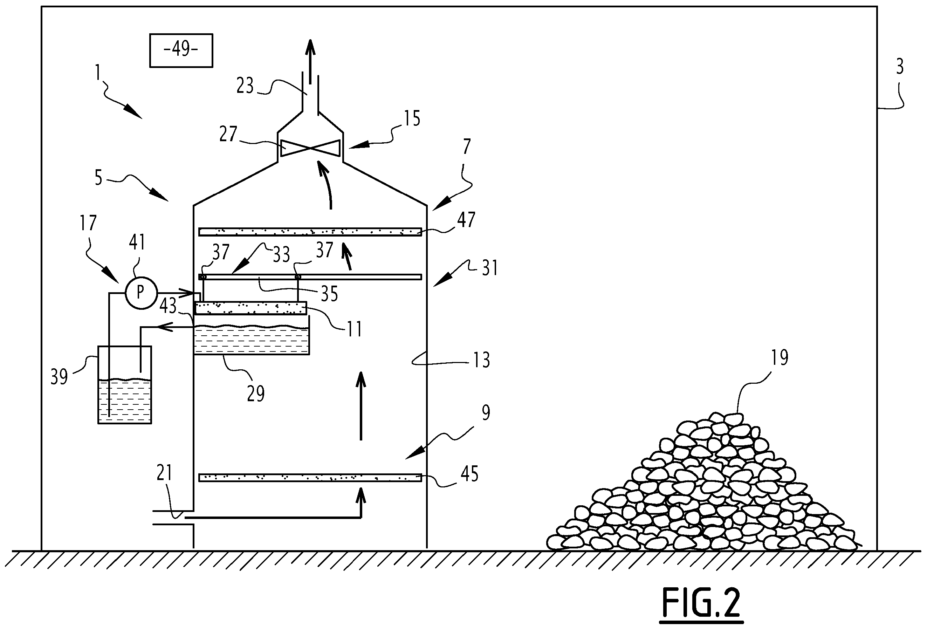

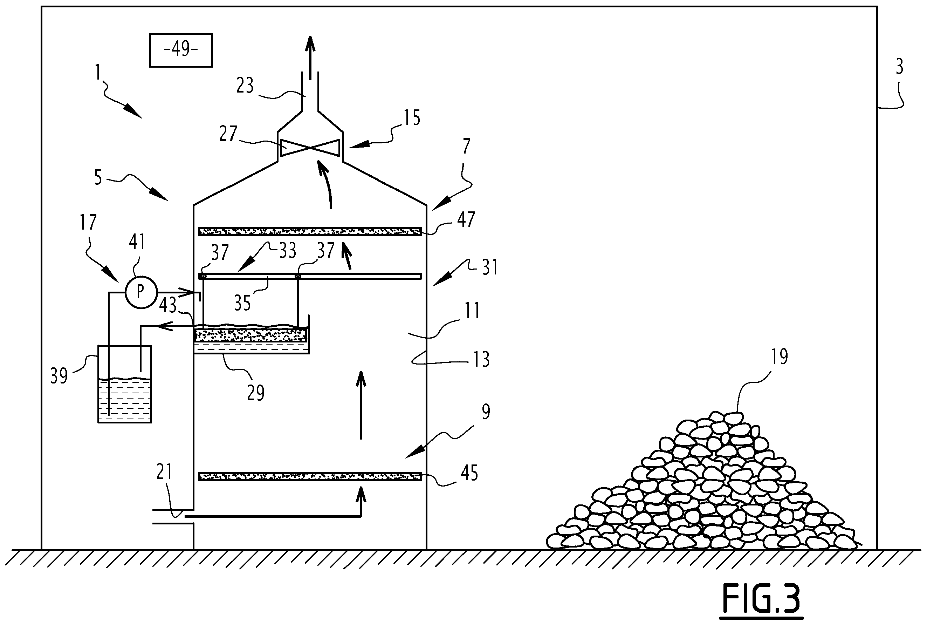

Le mécanisme 31 est de tout type adapté. Par exemple, il comporte des rails de guidage 33 et au moins un chariot 35 agencé pour se déplacer le long des rails 33. Le matériau à grande surface spécifique 11 est suspendu au chariot 35 par l'intermédiaire d'organes de levage 37. Le chariot 35 est agencé pour se déplacer le long des rails 33 entre une première position située au-dessus de la section d'évaporation 13 (figure 1), et une seconde position (figures 2 et 3), située au-dessus du bac 29.

Les organes de levage 37 sont par exemple des treuils. Ces organes de levage sont agencés pour, quand le chariot 35 occupe la première position, déplacer le matériau à grande surface spécifique 11 entre une position basse (figure 1) dans laquelle le matériau à grande surface spécifique 11 est disposé dans la section d'évaporation 13, et une position haute, dans laquelle le matériau à grande surface spécifique 11 est extrait hors de la section d'évaporation 13.

Quand le matériau à grande surface spécifique 11 est en position haute, il est susceptible d'être déplacé par le chariot 35 au-dessus du bac 29, comme illustré sur la figure 2. Quand le chariot 35 occupe la seconde position, les organes de levage 37 sont agencés de manière à pouvoir abaisser le matériau à grande surface spécifique 11, de manière à introduire celui-ci dans le bac 29, comme représenté sur la figure 3.

Le mécanisme 31 est agencé pour ramener le matériau à grande surface spécifique 11 dans la section d'évaporation 13 selon une séquence opératoire inverse de celle qui vient d'être décrite.

Le dispositif de rechargement 17 comporte de préférence une cuve 39 remplie de liquide et un organe de transfert 41 tel qu'une pompe. L'aspiration de l'organe de transfert 41 est raccordée fluidiquement au réservoir 39. Le refoulement de l'organe de transfert 41 débouche au-dessus du bac 29. Par ailleurs, le bac 29 présente un trop-plein 43, raccordé fluidiquement au réservoir 39. Le liquide aspiré par l'organe de transfert 41 dans le réservoir 39 est refoulé dans le bac 29. Le liquide s'écoule gravitairement par le trop-plein 43 jusque dans le réservoir 39.

Avantageusement, une plaque inférieure 45 en matériau à grande surface spécifique est disposée dans la tour, sous le matériau à grande surface spécifique 11. La plaque inférieure 45 est par exemple constituée du même matériau que le matériau à grande surface spécifique 11.

Elle est interposée verticalement entre l'entrée de gaz 21 et la section d'évaporation 13. Typiquement, elle occupe toute la section du conduit de circulation 9.

La plaque inférieure 45 permet de recueillir d'éventuelles gouttes de liquide tombant du matériau à grande surface spécifique 11. Le gaz est forcé de traverser la plaque inférieure avant d'arriver au matériau à grande surface spécifique 11, de telle sorte que le liquide recueilli par la plaque inférieure 45 est lui aussi évaporé.

Avantageusement, le dispositif d'évaporation 5 comprend une plaque supérieure 47, placée au-dessus du matériau à grande surface spécifique 11. La plaque supérieure 47 est typiquement constituée du même matériau que le matériau à grande surface spécifique 11. Elle est interposée verticalement entre le matériau à grande surface spécifique 11 et la sortie 23.

Elle occupe de préférence toute la section du conduit de circulation 9. Ainsi, les gouttelettes qui sont entraînées par le flux de gaz circulant à travers le matériau à grande surface spécifique 11 sont collectées et arrêtées quand le gaz passe à travers la plaque supérieure 47.

L'ensemble de traitement 5 comporte avantageusement un calculateur 49, pilotant le dispositif de rechargement 31. Avantageusement, le calculateur 49 pilote également le dispositif de mise en circulation de gaz 15, et l'organe de transfert 41.

Notamment, le calculateur 49 est programmé pour, périodiquement, mettre en oeuvre les étapes suivantes :
- extraction du matériau à grande surface spécifique 11 hors de la section d'évaporation 13 du conduit de circulation 9 ;
- plongement du matériau à grande surface spécifique 11 dans le bac 29 ;
- remise en place du matériau à grande surface spécifique 11 dans la section d'évaporation 13 du conduit de passage 9.

Le calculateur 49 est programmé pour piloter le dispositif de rechargement 31 de manière à ce que l'étape d'extraction du matériau à grande surface spécifique hors de la section d'évaporation 13 soit réalisée en levant le matériau à grande surface spécifique 11 à l'aide des organes de levage 37, jusque dans sa position haute.

Le calculateur 49 est également programmé pour que le mécanisme 31 mette en oeuvre, à l'étape de plongement du matériau à grande surface spécifique 11 dans le bac 29, les sous-étapes suivantes :
- déplacement du chariot 35 le long des rails 33 de la première position à la seconde position ;
- introduction du matériau à grande surface spécifique 11 dans le bac 29, en déplaçant le matériau à grande surface spécifique 11 vers le bas à l'aide des organes de levage 37.

Le matériau à grande surface spécifique 11 est déplacé vers le bas jusqu'à ce qu'il soit trempé totalement ou au moins partiellement dans le liquide remplissant le bac 29. Le matériau à grande surface spécifique est alors imprégné par le liquide.

Le calculateur 49 est de plus programmé pour que le mécanisme 31 mette en oeuvre les sous-étapes suivantes à l'étape de remise en place du matériau à grande surface spécifique :
- extraction du matériau à grande surface spécifique 11 hors du bac 29 par déplacement vers le haut, à l'aide des treuils 37 ;
- déplacement du chariot 35, portant le matériau à grande surface spécifique 11 réimprégné, de la seconde position au-dessus du bac à la première position au-dessus de la section d'évaporation ;
- déplacement vers le bas du matériau à grande surface spécifique 11, à l'aide des organes de levage 37 jusqu'à ce que le matériau à grande surface spécifique 11 soit remis en place dans la section de passage 13.

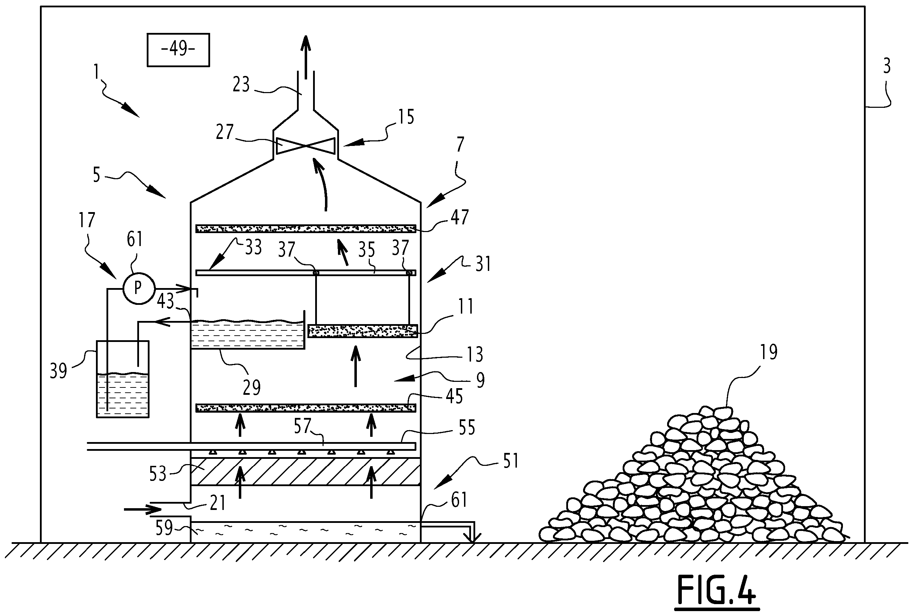

Une variante de l'ensemble de traitement 5 selon le premier mode de réalisation est représentée sur la figure 4.

Seuls les points par lesquels l'ensemble de traitement de la figure 4 se différencie de celui des figures 1 à 3 seront détaillés ci-dessous.

Les éléments identiques ou assurant les mêmes fonctions seront désignés par les mêmes références.

L'ensemble de traitement 5 de la figure 4 comporte un dispositif de lavage des gaz 51, disposé en amont du dispositif d'évaporation 7.

Plus précisément, le dispositif de lavage 51 est implanté dans la partie basse de la tour. Il comporte un garnissage 53. Le garnissage 53 est interposé verticalement entre l'entrée de gaz 21 et le matériau à grande surface spécifique 11.

Il est situé sous la plaque inférieure 45, quand le dispositif d'évaporation en comporte une.

Le dispositif de lavage 51 comporte encore une alimentation en liquide de lavage 55. Le liquide de lavage est par exemple de l'eau, ou de l'eau chargée d'un additif.

L'alimentation 55 comporte un ou plusieurs organes 57 configurés pour projeter le liquide de lavage sur le garnissage 53. L'organe 57 est par exemple une rampe portant une pluralité de buses d'aspersion. Chaque organe 57 est située au-dessus du garnissage 53.

Le dispositif de lavage 51 comporte encore un bac de collecte 59, situé en bas de la tour, sous le garnissage 53. La ou chaque entrée 21 débouche entre le bac 59 et le garnissage 53. Le gaz pénétrant par les entrées 21 circule vers le haut à travers le garnissage 53, alors que le liquide de lavage 57 ruisselle gravitairement vers le bas à travers le garnissage 53.

Le gaz est ainsi mis en contact avec le liquide de lavage en passant à travers le garnissage 53.

Cette étape permet de collecter certaines impuretés contenues dans le gaz, par exemple les poussières.

Le liquide de lavage, chargé en impuretés, est collecté dans le bac 59, et évacué par exemple par un trop-plein 61. Le liquide de lavage est recyclé ou est évacué.

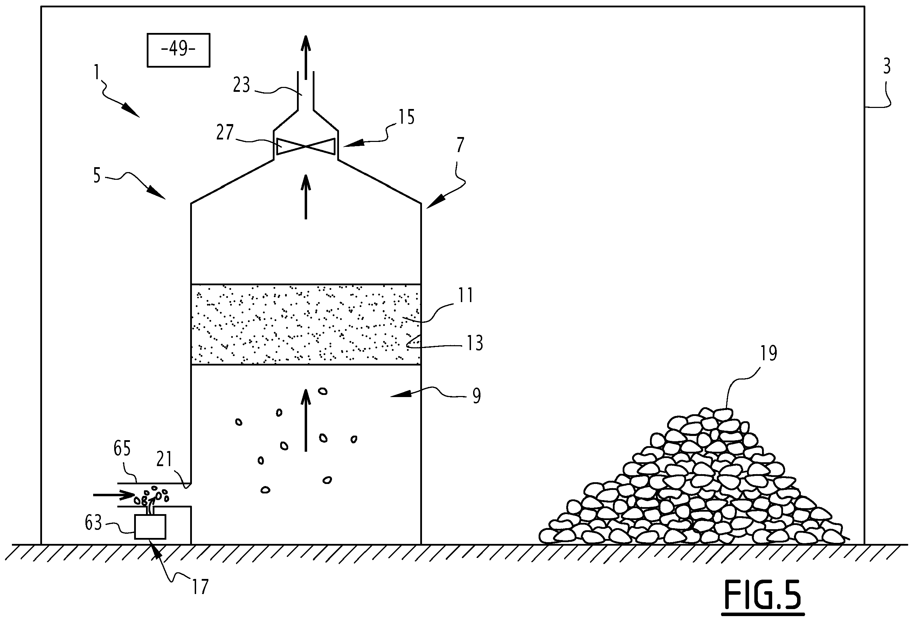

Un second mode de réalisation de l'invention va maintenant être décrit, en référence à la figure 5.

Seuls les points par lesquels le second mode de réalisation se différencie du premier seront détaillés ci-dessous.

Les éléments identiques ou assurant la même fonction dans les deux modes de réalisation seront désignés par les mêmes références.

Dans le mode de réalisation de la figure 5, le dispositif de rechargement 17 comporte un appareil de nébulisation 63, injectant le liquide sous forme de gouttelettes dans le gaz en amont du matériau à grande surface spécifique 11.

L'appareil de nébulisation 63 est de tout type adapté. Il produit un brouillard de fines gouttelettes, obtenues par exemple par un gicleur à pression, ou par projection sur un disque tournant (spinning disc), ou par ultra vibration. De préférence, l'appareil de nébulisation fonctionne à une température inférieure à 50°C, c'est-à-dire à température ambiante.

Le liquide est par exemple injecté dans un conduit 65 débouchant dans l'entrée 21. Le matériau à grande surface spécifique 11 dans ce cas occupe toute la section intérieure de la tour.

Une partie des gouttelettes de liquide injecté par le nébulisateur 63 dans le gaz sont évaporées avant d'arriver au matériau à grande surface spécifique 11. Le reste des gouttelettes est absorbé par le matériau à grande surface spécifique 11, ce qui permet de réimprégner en permanence ce matériau à grande surface spécifique 11 en liquide. Le flux de gaz traversant le matériau à grande surface spécifique 11 se charge en vapeur de liquide.

Un troisième mode de réalisation de l'invention va maintenant être décrit, en référence à la figure 6. Seuls les points par lesquels ce troisième mode de réalisation diffère du premier mode de réalisation seront décrits ci-dessous. Les éléments identiques ou assurant la même fonction seront désignés par les mêmes références dans les deux modes de réalisation.

Le dispositif d'évaporation 5 est ici un tuyau, ce tuyau définissant intérieurement le conduit de circulation de gaz 9. Le tuyau est de tout type adapté. Il présente typiquement une section comprise entre 500 et 100000 mm².

Le matériau à grande surface spécifique 11 remplit entièrement un tronçon du conduit de circulation 9, ce tronçon définissant la section d'évaporation 13.

Le dispositif de mise en circulation 15 comporte un organe de circulation tel qu'un ventilateur ou une soufflante 67. Par exemple, l'organe de circulation 67 est intercalé sur le tuyau, en amont de la section d'évaporation 13. Il refoule le gaz vers la section d'évaporation 13.

En variante, l'organe de circulation est placé en aval de la section d'évaporation 13.

Le dispositif de rechargement 17 comprend avantageusement des organes 69 agencés pour monter la section d'évaporation 13 de manière réversible dans le conduit de circulation.

En d'autres termes, la section d'évaporation 13 est susceptible d'être séparée du reste du conduit de circulation 9.

Par exemple, les organes 69 sont des brides ou tout autre organe adapté.

La section d'évaporation 13 est par exemple configurée de manière à ce que le matériau à grande surface spécifique 11 épuisé puisse être vidé du tronçon de tuyau. Celui-ci est alors ensuite rempli par du matériau à grande surface spécifique frais, contenant du liquide. La section d'évaporation 13 est ensuite remise en place dans le tuyau.

En variante, le tronçon constituant la section d'évaporation 13 est jetable. Ce tronçon est alors remplacé par un tronçon neuf, contenant un matériau à grande surface spécifique frais, imbibé de liquide. La nouvelle section d'évaporation 13 est remontée sur le tuyau, à la place de l'ancienne.

Ce mode de réalisation est particulièrement bien adapté au cas d'un local 3 équipé d'une ventilation forcée 71 fonctionnant pratiquement en permanence. Le local 3 est par exemple dans ce cas un silo à grains ayant une entrée d'air 73 communiquant avec l'extérieur et une sortie d'air 75 communiquant également avec l'extérieur. La ventilation forcée 71 est prévue pour assurer une circulation d'air de l'entrée d'air 73 à la sortie d'air 75 à travers les grains 77. Un collecteur 79 de distribution d'air est typiquement ménagé dans le silo, sous les grains 77. La ventilation forcée 71 comprend un organe 81 de circulation d'air tel qu'un ventilateur, dont l'aspiration est raccordée à l'entrée d'air 73 et le refoulement au collecteur 79.

La sortie d'air 75 est typiquement située en partie supérieure du silo. En fonctionnement normal, l'organe de circulation 81 aspire l'air extérieur, le refoule dans le collecteur d'air 79, l'air circulant jusqu'à la sortie d'air 75 à travers les grains à partir du collecteur 79.

L'ensemble d'évaporation 5 est placé à l'extérieur du silo. Il est agencé de manière à aspirer l'air extérieur et à refouler l'air chargé en vapeur de produit dans une zone proche de l'entrée d'air 73. Par exemple, l'injection est faite en bas de la chambre recevant les grains 77, dans le collecteur 79. L'injection est faite à un faible débit d'air. L'air injecté a une concentration en vapeur de chaque produit biocide et/ou phytoprotecteur de préférence proche de la saturation

Par exemple, le tronçon définissant la section d'évaporation 13 présente un diamètre de 300 mm et une longueur d'un mètre.

Un cinquième mode de réalisation de l'invention va maintenant être détaillé, en référence à la figure 7.

Seuls les points par lesquels le cinquième mode de réalisation diffère du quatrième seront détaillés ci-dessous.

Les éléments identiques ou assurant la même fonction dans les deux modes de réalisation seront désignés par les mêmes références.

Dans ce mode de réalisation, le tronçon de tuyau constituant la section d'évaporation n'est pas démontable. Il n'est pas prévu de remplacer le matériau à grande surface spécifique épuisé avec un nouveau matériau à grande surface spécifique imprégné de liquide. Au contraire, le dispositif de rechargement 17 est agencé pour réimprégner périodiquement le matériau à grande surface spécifique en liquide.

A cette fin, le dispositif de rechargement 17 comprend une réserve 83 contenant du liquide, un distributeur de liquide 85 et un organe de circulation 87 de liquide aspirant le liquide dans la réserve 83 et refoulant le liquide dans le distributeur de liquide 85.

Le distributeur de liquide est agencée pour projeter le liquide sur ou dans le matériau à grande surface spécifique 11.

Par exemple, le distributeur de liquide 85 est, comme illustré sur la figure 7, un tuyau perforé noyé dans le matériau à grande surface spécifique 11. Le tuyau perforé s'étend suivant la longueur de la section d'évaporation. Il est placé par exemple selon l'axe de ce tronçon.

En variante, le distributeur de liquide 85 comporte plusieurs orifices percés dans la paroi du tronçon du tuyau définissant la section d'évaporation, et alimentés en liquide par un collecteur.

Le calculateur 49 pilote à la fois l'organe de circulation de gaz 69 et l'organe de circulation de liquide 87. Il est programmé pour réaliser des injections de liquide à une fréquence prédéterminée. La quantité de liquide injecté à chaque injection est également déterminée par le calculateur. La fréquence des injections est fixe, ou en variante est déterminée par le calculateur en fonction de paramètres tels que le débit d'air.

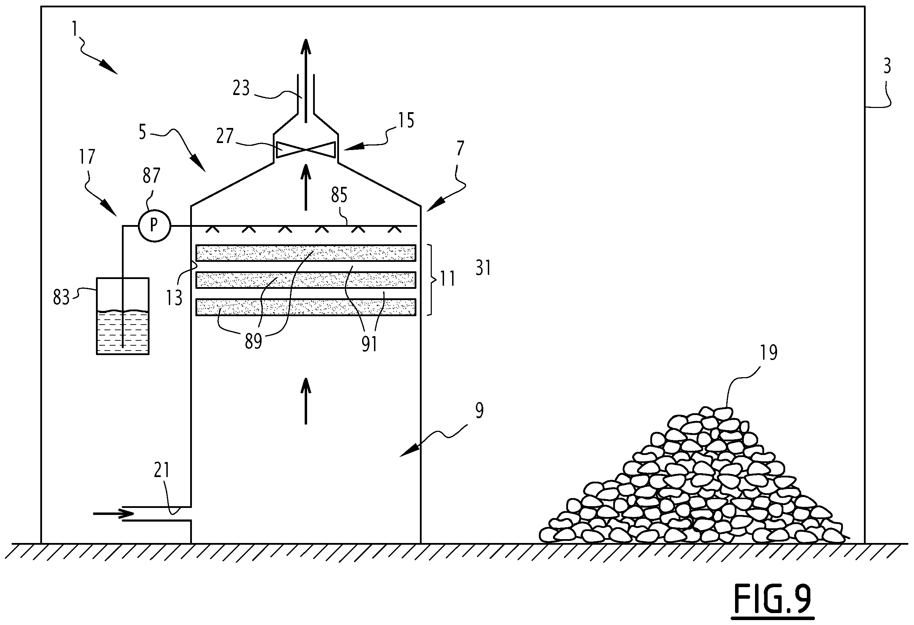

Il est à noter qu'un tel dispositif de rechargement peut être également utilisé quand le dispositif d'évaporation est une tour (voir par exemple figure 9). Le distributeur de liquide est alors une rampe, placée par exemple au-dessus du matériau à grande surface spécifique.

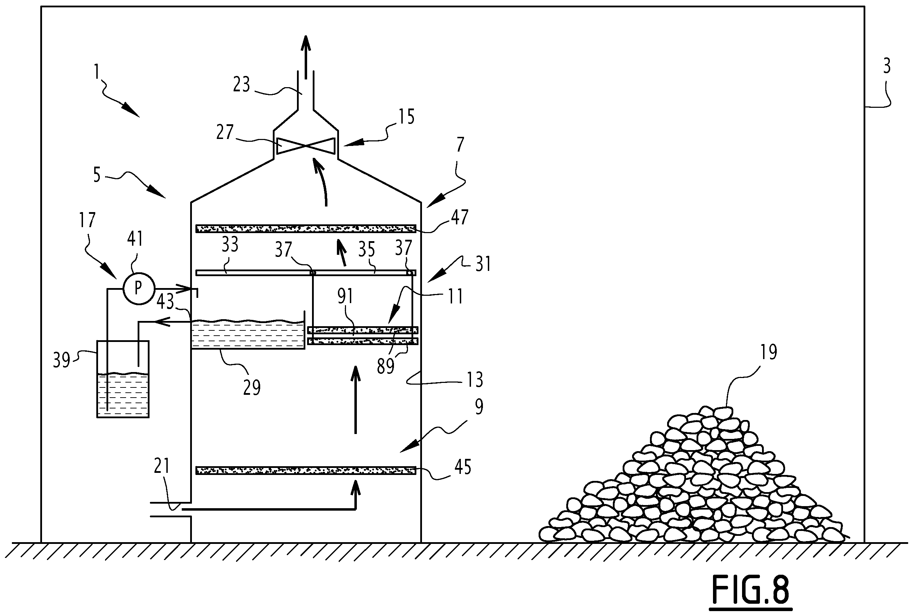

Une variante du premier mode de réalisation va maintenant être décrite, en référence à la figure 8. Seuls les points par lesquels l'ensemble de traitement se différencie de celui de la figure 1 seront détaillés ci-dessous. Les éléments identiques ou assurant la même fonction seront désignés par les mêmes références.

Dans cette variante, le matériau à grande surface spécifique 11 est agencé en au moins deux couches 89, disposées l'une au-dessus de l'autre et séparées l'une de l'autre par un espace 91.

Chaque couche 89 a une épaisseur inférieure à une limite prédéterminée, par exemple 100 mm.

Ainsi, les couches 89 sont entièrement séparées l'une de l'autre, par l'espace vide 91. Chaque couche a par exemple une épaisseur inférieure à 50 mm, de préférence inférieure à 20 mm, et encore de préférence inférieure à 15 mm. Les couches 89 sont typiquement parallèles les unes aux autres.

Le matériau à grande surface spécifique 11 peut être agencé en deux couches, trois couches, ou plus de trois couches superposées et séparées par des espaces les unes des autres.

Quand le matériau à grande surface spécifique est de la mousse de polyuréthane à cellules ouvertes, on choisit pour chaque couche une hauteur d'environ 13 mm.

Cette variante de réalisation offre l'avantage de permettre une excellente imprégnation du matériau à grande surface spécifique. En effet, il a été observé que, quel que soit le mode d'imprégnation du matériau à grande surface spécifique par le liquide, le liquide s'accumule en bas de la couche de matériau à grande surface spécifique, sur une hauteur de 10-15mm déterminée par l'équilibre gravité/capillarité

Par exemple, dans le cas où le matériau à grande surface spécifique 11 est de la mousse de polyuréthane à cellules ouvertes, si on imprègne une plaque de mousse de polyuréthane de 25 mm d'épaisseur comme décrit en référence à la figure 1, le liquide se concentre sur une tranche de treize mm d'épaisseur, en bas de la plaque de mousse de polyuréthane.

Il est donc particulièrement avantageux d'agencer le matériau à grande surface spécifique en plusieurs couches, d'épaisseur choisie de manière à permettre une imprégnation de toute la couche, ou de sensiblement toute la couche de matériau à grande surface spécifique.

Il est ainsi possible de charger le matériau à grande surface spécifique avec une plus grande quantité de liquide.

Dans l'exemple représenté sur la figure 8, le dispositif de rechargement 12 est prévu pour extraire toutes les couches 89 de matériau à grande surface spécifique hors de la section d'évaporation 13, et pour les plonger toutes dans le bac 29.

En variante, seule la ou les couches supérieures sont extraites de la section d'évaporation 13 et plongées dans le bac 29 par le mécanisme 31.

Une variante du mode de réalisation de la figure 5 va maintenant être détaillée, en référence à la figue 9. Seuls les points par lesquels cette variante diffère du mode de réalisation de la figure 5 seront détaillés ci-dessous.

Les éléments identiques ou assurant la même fonction seront désignés par les mêmes références.

Dans cette variante, le dispositif de nébulisation 63 est remplacé par le dispositif comprenant une réserve de liquide 83, un distributeur de liquide 85 et un organe de circulation 87, décrits en référence à la figure 7. Le distributeur de liquide 85 est une rampe d'aspersion, placée au-dessus du matériau à grande surface spécifique 11.

Par ailleurs, le matériau à grande surface spécifique 11 est agencé en plusieurs couches 89, ici trois couches, disposées l'une au-dessous de l'autre et séparées les unes des autres par des espaces 91, comme décrit en référence à la figure 8.

La réimprégnation du matériau à grande surface spécifique se fait en projetant le liquide à l'aide du distributeur 85, sur la couche 89 située le plus haut.

Une fois que la couche 89 située le plus haut est entièrement imprégnée de liquide, le liquide projeté par le distributeur 85 ne peut plus être absorbé par la couche supérieure 89. Le liquide s'égoutte alors à partir de la couche supérieure 89 sur la couche 89 située immédiatement en-dessous de celle-ci. Une fois la seconde couche entièrement imprégnée, le liquide s'égoutte sur la couche située en-dessous, etc. Il est ainsi possible de réimprégner l'ensemble des couches formant le matériau à grande surface spécifique 11.

Il est à noter que les différents modes de réalisation et les différentes variantes décrites ci-dessus peuvent être combinés. Ainsi, le gaz peut subir une étape de lavage non seulement dans le mode de réalisation des figures 1 à 3, mais également dans tous les autres modes de réalisation ou variantes de réalisation.

Le matériau à grande surface spécifique 11 peut être rechargé par un dispositif de nébulisation également dans les modes de réalisation ou variantes de réalisation des figures 6, 7, et 9. La réimprégnation par le dispositif de nébulisation peut venir en plus des dispositifs de réimprégnation décrits pour les figures 1 à 4 et 6 à 9.

De même, il est possible de prévoir pour les dispositifs d'évaporation de type tour que le matériau à grande surface spécifique épuisé est remplacé par un nouveau matériau à grande surface spécifique imprégné de liquide, et non réimprégné comme décrit relativement aux figures 1 à 4.

Dans la variante de réalisation de la figure 9, il est possible de prévoir un distributeur de liquide unique au-dessus des couches 89. Il est possible également de prévoir plusieurs distributeurs, situés au-dessus de plusieurs couches 89, ou au-dessus de chaque couche 89.

Selon un second aspect, l'invention porte sur un procédé de traitement qui comprend les étapes suivantes :
- mise en circulation d'un gaz à travers un conduit de circulation 9, un matériau à grande surface spécifique 11 remplissant une section d'évaporation 13 du conduit de circulation 9, un liquide imprégnant le matériau à grande surface spécifique 11, le liquide contenant au moins un produit ou mélange de produits biocides et/ou phytoprotecteurs volatiles, de température d'ébullition comprise entre 130 et 280°C à pression atmosphérique, le matériau à grande surface spécifique ayant une capacité de rétention de liquide supérieure à 50 l/m³ de matériau à 20°C ;
- quand le matériau à grande surface spécifique 11 est épuisé en liquide, rechargement par réimprégnation du matériau à grande surface spécifique 11 en liquide ou remplacement du matériau à grande surface spécifique 11 épuisé par un nouveau matériau à grande surface spécifique 11 imprégné de liquide.

Le procédé de traitement est prévu pour être mis en oeuvre dans les ensembles de traitement 5 décrits ci-dessus.

Le matériau à grande surface spécifique 11 est du type décrit plus haut.

Selon une variante de réalisation, la réimprégnation du matériau à grande surface spécifique 11 est effectuée en plongeant le matériau à grande surface spécifique 11 dans un bac 29 contenant du liquide.

Cette réimprégnation est effectuée comme décrit plus haut relativement aux figures 1 à 3 et 8.

Avantageusement, dans ce cas, le conduit de circulation 9 est ménagé dans une tour d'axe vertical, le bac 29 étant placé dans la tour, la section d'évaporation 13 étant délimité entre le bac 29 et la paroi de la tour.

Un tel agencement a été décrit plus haut.

En variante, la réimprégnation du matériau à grande surface spécifique 11 est effectuée en injectant le liquide sous forme de gouttelettes dans le gaz en amont du matériau à grande surface spécifique 11, de préférence à une température inférieure à 50°C.

Typiquement, l'injection de liquide sous forme de gouttelettes est effectuée avec un appareil de nébulisation, comme décrit plus haut en référence à la figure 5.

Selon une autre variante, la réimprégnation du matériau à grande surface spécifique 11 est effectuée en projetant le liquide sur ou dans le matériau à grande surface spécifique 11, à partir d'une réserve de liquide 83.

Le liquide est par exemple projeté dans le matériau à grande surface spécifique par un tube percé, noyé dans le matériau à grande surface spécifique, comme décrit en référence à la figure 7. En variante, le liquide est projeté sur le matériau à grande surface spécifique 11, par un distributeur se présentant par exemple sous la forme d'une rampe d'aspersion, disposée au-dessus du matériau à grande surface spécifique 11.

Suivant une autre variante, le rechargement est effectué en démontant la section d'évaporation 13 du conduit de circulation 9, qui contient le matériau à grande surface spécifique 11 épuisé. Le matériau à grande surface spécifique 11 épuisé est alors remplacé par un nouveau matériau à grande surface spécifique imprégné de liquide, et le tronçon d'évaporation 13 est remonté dans le conduit de circulation 9.

Ceci est particulièrement adapté au cas où le conduit de circulation 9 est un tuyau, comme représenté sur les figures 5 et 6.

Selon encore une autre variante, le rechargement est effectué en démontant la section d'évaporation 13 du conduit de circulation 9, contenant le matériau à grande surface spécifique 11 épuisé, et en remontant une nouvelle section d'évaporation 13 contenant un nouveau matériau à grande surface spécifique imprégné de liquide.

De nouveau, ceci est particulièrement adapté au cas où le conduit de circulation est un tuyau, comme décrit en référence à la figure 6.

Avantageusement, le gaz chargé en liquide vaporisé sortant du conduit de circulation 9 est injecté dans un local 3.

Comme décrit plus haut, le gaz peut être injecté à des fins de désinfection du local. En variante, le gaz est injecté en vue d'appliquer un traitement phytoprotecteur. Dans ce cas, le local contient typiquement des produits végétaux, auxquels le traitement phytoprotecteur est destiné.

En tout état de cause, le local est du type décrit plus haut.

## Revendications

1. Ensemble de traitement, l'ensemble (5) comprenant :
- un dispositif d'évaporation (7) comportant un conduit (9) de circulation de gaz, et un matériau à grande surface spécifique (11) remplissant une section d'évaporation (13) du conduit de circulation (9) ;
- un dispositif (15) de mise en circulation du gaz à travers le conduit de circulation (9) ;
- un liquide imprégnant le matériau à grande surface spécifique (11),
**caractérisé en ce que** le liquide contenant au moins un produit ou un mélange de produits biocides et/ou phytoprotecteurs volatiles, de température d'ébullition comprise entre 130 et 280°C à pression atmosphérique, le matériau à grande surface spécifique ayant une capacité de rétention de liquide supérieure à 50 l/m³ de matériau à grande surface spécifique à 20°C;
- un dispositif de rechargement (17), agencé pour réimprégner le matériau à grande surface spécifique (11) en liquide ou pour remplacer le matériau à grande surface spécifique (11) épuisé avec un nouveau matériau à grande surface spécifique (11) imprégné de liquide.

2. Ensemble selon la revendication 1, dans lequel au moins un des produits est choisi dans la liste de produits phytoprotecteurs ou biocides suivantes : huile essentielle ; terpène ; alcool à chaîne courte de C6 à C10 saturé ou insaturé, comme par exemple l'octanol, le 2-éthylhexanol ; produit de synthèse volatile, comme par exemple l'hexanal, le 1,4-diméthylnaphtalène et le 3-décène-2-one ; acides organiques liquides à point d'ébullition élevé, tels que l'acide pélargonique et l'acide parabénique ; esters avec activité biocide comme par exemple l'isovalérianate d'isoamyle.

3. Ensemble selon la revendication 1 ou 2, dans lequel le dispositif d'évaporation (7) est une tour d'axe vertical, la section d'évaporation (13) étant d'axe vertical et ayant de préférence une section horizontale inférieure à 75% de la section horizontale de la tour.

4. Ensemble selon la revendication 1 ou 2, dans lequel le dispositif d'évaporation (7) est un tuyau définissant le conduit (9) de circulation des gaz.

5. Ensemble selon l'une quelconque des revendications précédentes, dans lequel le matériau à grande surface spécifique (11) est une mousse à cellules ouvertes ou est en un matériau minéral divisé tel que la vermiculite ou la perlite.

6. Ensemble selon l'une quelconque des revendications précédentes, dans lequel le matériau à grande surface spécifique (11) est agencé en au moins deux couches (89) disposées l'une au-dessus de l'autre et séparées l'une de l'autre par un espace (9), chaque couche (89) ayant une épaisseur inférieure à une limite prédéterminée, par exemple 100 mm.

7. Ensemble selon l'une quelconque des revendications précédentes, dans lequel le dispositif de rechargement (17) comprend un bac (29) rempli de liquide, et un mécanisme (31) agencé pour extraire le matériau à grande surface spécifique (11) de la section d'évaporation (13) du conduit de circulation (9), le plonger dans le bac (29) et le remettre en place dans la section d'évaporation (13) du conduit de circulation (9), le dispositif d'évaporation (7) étant de préférence une tour d'axe vertical, la section d'évaporation (13) étant de préférence d'axe vertical, le bac (29) étant de préférence placé dans la tour, la section d'évaporation (13) étant de préférence délimitée entre le bac (29) et la paroi de la tour.

8. Ensemble selon l'une quelconque des revendications 1 à 7, dans lequel le dispositif de rechargement (17) comprend un appareil de nébulisation (63), injectant le liquide sous forme de gouttelettes dans le gaz en amont du matériau à grande surface spécifique (11), de préférence à une température inférieure à 50°C.

9. Ensemble selon l'une quelconque des revendications 1 à 6, dans lequel le dispositif de rechargement (17) comprend une réserve (83) contenant du liquide, un distributeur (85) de liquide, et un organe (87) de circulation de liquide aspirant le liquide dans la réserve (83) et refoulant le liquide dans le distributeur de liquide (85), le distributeur de liquide (85) étant agencé pour projeter le liquide sur ou dans le matériau à grande surface spécifique (11).

10. Procédé de traitement, le procédé comprenant les étapes suivantes :
- mise en circulation d'un gaz à travers un conduit de circulation (9), un matériau à grande surface spécifique (11) remplissant une section d'évaporation (13) du conduit de circulation (9), un liquide imprégnant le matériau à grande surface spécifique (11), **caractérisé en ce que** le liquide contenant au moins un produit ou un mélange de produits biocides et/ou phytoprotecteurs volatiles, de température d'ébullition comprise entre 130 et 280°C à pression atmosphérique, le matériau à grande surface spécifique ayant une capacité de rétention de liquide supérieure à 50 l/m³ de matériau à grande surface spécifique à 20°C;
- quand le matériau à grande surface spécifique (11) est épuisé en liquide, rechargement par réimprégnation du matériau à grande surface spécifique (11) en liquide ou remplacement du matériau à grande surface spécifique (11) épuisé par un nouveau matériau à grande surface spécifique (11) imprégné de liquide.

11. Procédé selon la revendication 10, dans lequel la réimprégnation du matériau à grande surface spécifique (11) est effectuée en projetant du liquide sur ou dans le matériau à grande surface spécifique (11), à partir d'une réserve (83) de liquide.

12. Procédé selon la revendication 10, dans lequel le rechargement est effectué en démontant la section d'évaporation (13) contenant le matériau à grande surface spécifique (11) épuisé, en remplaçant le matériau à grande surface spécifique (11) épuisé par un nouveau matériau à grande surface spécifique (11) imprégné de liquide, et remontant la section d'évaporation (13) contenant un nouveau matériau à grande surface spécifique (11) imprégné de liquide.

13. Procédé selon la revendication 10, dans lequel le rechargement est effectué en démontant la section d'évaporation (13) contenant le matériau à grande surface spécifique (11) épuisé, et en remontant une nouvelle la section d'évaporation (13) contenant un nouveau matériau à grande surface spécifique (11) imprégné de liquide.

14. Procédé selon l'une quelconque des revendications 10 à 13, dans lequel le gaz chargé en liquide vaporisé sortant du conduit de circulation (9) est injecté dans un local (3) contenant des produits végétaux (19, 77).

15. Ensemble (11) de stockage ou de culture de produits végétaux comprenant :
- un local (3) contenant des produits végétaux (19, 77) ;
- un ensemble (5) de traitement selon l'une quelconque des revendications 1 à 9, le conduit de circulation (9) de gaz étant raccordé fluidiquement au volume interne du local (3).

## Patentansprüche

1. Behandlungseinheit, wobei die Einheit (5) umfasst:
- eine Verdampfungsvorrichtung (7) mit einer Gaszirkulationsleitung (9) und einem Material mit großer spezifischer Oberfläche (11), das einen Verdampfungsabschnitt (13) der Zirkulationsleitung (9) füllt;
- eine Vorrichtung (15) zum Inzirkulationversetzen des Gases durch die Zirkulationsleitung (9);
- eine Flüssigkeit, die das Material mit großer spezifischer Oberfläche (11) imprägniert,
**dadurch gekennzeichnet, dass** die Flüssigkeit, mindestens ein flüchtiges biozides und/oder phytoprotektives Produkt oder Produktgemisch mit einem Siedepunkt zwischen 130 und 280 °C bei atmosphärischem Druck enthält, wobei das Material mit großer spezifischer Oberfläche eine Flüssigkeitsrückhaltefähigkeit von über 50 l/m³ Material mit großer spezifischer Oberfläche bei 20 °C hat;
- eine Nachfüllvorrichtung (17), die eingerichtet ist, um das Material mit großer spezifischer Oberfläche (11) erneut mit Flüssigkeit zu imprägnieren oder um das erschöpfte Material mit großer spezifischer Oberfläche (11) durch ein neues, mit Flüssigkeit imprägniertes Material mit großer spezifischer Oberfläche (11) zu ersetzen.

2. Einheit nach Anspruch 1, wobei mindestens eins der Produkte aus der folgenden Pflanzenschutzmittel- oder Biozidliste ausgewählt ist: ätherisches Öl; Terpen; kurzkettiger gesättigter oder ungesättigter C6-C10-Alkohol, wie z. B. Octanol, 2-Ethylhexanol; flüchtiges Syntheseprodukt, wie z. B. Hexanal, 1,4-Dimethylnaphtalen und 3-Decen-2-on; flüssige organische Säuren mit hohem Siedepunkt wie Pelargonsäure und Parabensäure; Ester mit biozider Wirkung wie z. B. Isovaleriansäureisoamylat.

3. Einheit nach Anspruch 1 oder 2, wobei die Verdampfungsvorrichtung (7) ein Turm mit vertikaler Achse ist, wobei der Verdampfungsabschnitt (13) vertikaler Achse ist und vorzugsweise einen horizontalen Querschnitt von unter 75 % des horizontalen Querschnitts des Turms hat.

4. Einheit nach Anspruch 1 oder 2, wobei die Verdampfungsvorrichtung (7) ein Rohr ist, das die Gaszirkulationsleitung (9) definiert.

5. Einheit nach einem der vorhergehenden Ansprüche, wobei das Material mit großer spezifischer Oberfläche (11) ein offenzelliger Schaumstoff ist oder aus einem geteilten mineralischen Material wie Vermiculit oder Perlit ist.

6. Einheit nach einem der vorhergehenden Ansprüche, wobei das Material mit großer spezifischer Oberfläche (11) in mindestens zwei Schichten (89) eingerichtet ist, die übereinander angeordnet und voneinander durch einen Zwischenraum (9) getrennt sind, wobei jede Schicht (89) eine Dicke unter einem vorbestimmten Grenzwert, z. B. 100 mm, hat.

7. Einheit nach einem der vorhergehenden Ansprüche, wobei die Nachfüllvorrichtung (17) einen mit Flüssigkeit gefüllten Behälter (29) und einen Mechanismus (31) umfasst, der eingerichtet ist, um das Material mit großer spezifischer Oberfläche (11) aus dem Verdampfungsabschnitt (13) der Zirkulationsleitung (9) zu extrahieren, es in den Behälter (29) einzutauchen und es erneut im Verdampfungsabschnitt (13) der Zirkulationsleitung (9) zu platzieren, wobei die Verdampfungsvorrichtung (7) vorzugsweise ein Turm mit vertikaler Achse ist, wobei der Verdampfungsabschnitt (13) vorzugsweise mit vertikaler Achse ist, wobei der Behälter (29) vorzugsweise im Turm platziert ist, wobei der Verdampfungsabschnitt (13) vorzugsweise zwischen dem Behälter (29) und der Wand des Turms begrenzt ist.

8. Einheit nach einem der Ansprüche 1 bis 7, wobei die Nachfüllvorrichtung (17) eine Vernebelungsvorrichtung (63) umfasst, die die Flüssigkeit in Form von Tröpfchen in das Gas vor dem Material mit großer spezifischer Oberfläche (11) einleitet, vorzugsweise bei einer Temperatur von unter 50 °C.

9. Einheit nach einem der Ansprüche 1 bis 6, wobei die Nachfüllvorrichtung (17) einen Vorratsbehälter (83), der Flüssigkeit enthält, einen Flüssigkeitsspender (85) und ein Flüssigkeitszirkulationsorgan (87) umfasst, das die Flüssigkeit aus dem Vorratsbehälter (83) saugt und die Flüssigkeit in den Flüssigkeitsspender (85) drückt, wobei der Flüssigkeitsspender (85) derart eingerichtet ist, um die Flüssigkeit auf oder in das Material mit großer spezifischer Oberfläche (11) zu projizieren.

10. Behandlungsverfahren, wobei das Verfahren die folgenden Schritte umfasst:
- Inzirkulationversetzen eines Gases durch eine Zirkulationsleitung (9), wobei ein Material mit großer spezifischer Oberfläche (11) einen Verdampfungsabschnitt (13) der Zirkulationsleitung (9) füllt, wobei eine Flüssigkeit das Material mit großer spezifischer Oberfläche (11) imprägniert, **dadurch gekennzeichnet, dass** die Flüssigkeit mindestens ein flüchtiges biozides und/oder phytoprotektives Produkt oder Produktgemisch mit einem Siedepunkt zwischen 130 und 280 °C bei atmosphärischem Druck enthält, wobei das Material mit großer spezifischer Oberfläche eine Flüssigkeitsrückhaltefähigkeit von über 50 l/m³ Material mit großer spezifischer Oberfläche bei 20 °C aufweist;
- wenn die Flüssigkeit im Material mit großer spezifischer Oberfläche (11) erschöpft ist, Nachfüllen durch erneutes Imprägnieren des Materials mit großer spezifischer Oberfläche (11) mit Flüssigkeit oder Ersetzen des erschöpften Materials mit großer spezifischer Oberfläche (11) durch ein durch ein neues, mit Flüssigkeit imprägniertes Material mit großer spezifischer Oberfläche (11).

11. Verfahren nach Anspruch 10, wobei die erneute Imprägnierung des Materials mit großer spezifischer Oberfläche (11) durch Projizieren von Flüssigkeit auf oder in das Material mit großer spezifischer Oberfläche (11) aus einem Flüssigkeitsvorratsbehälter (83) erfolgt.

12. Verfahren nach Anspruch 10, wobei das Nachfüllen durch Demontieren des Verdampfungsabschnitts (13), der das erschöpfte Material mit großer spezifischer Oberfläche (11) enthält, durch Ersetzen des erschöpften Materials mit großer spezifischer Oberfläche (11) durch ein neues, mit Flüssigkeit imprägniertes Material mit großer spezifischer Oberfläche (11) und erneutes Montieren des Verdampfungsabschnitts (13), der ein neues, mit Flüssigkeit imprägniertes Material mit großer spezifischer Oberfläche (11) enthält, erfolgt.

13. Verfahren nach Anspruch 10, wobei das Nachfüllen durch Demontieren des Verdampfungsabschnitts (13), der das erschöpfte Material mit großer spezifischer Oberfläche (11) enthält, und durch erneutes Montieren eines neuen Verdampfungsabschnitts (13), der ein neues, mit Flüssigkeit imprägniertes Material mit großer spezifischer Oberfläche (11) enthält, erfolgt.

14. Verfahren nach einem der Ansprüche 10 bis 13, wobei das aus der Zirkulationsleitung (9) austretende, mit verdampfter Flüssigkeit beladene Gas in einen Raum (3) mit Pflanzenprodukten (19, 77) eingeleitet wird.

15. Einheit (11) zur Lagerung oder Aufzucht von Pflanzenprodukten, umfassend:
- einen Raum (3), der Pflanzenprodukte (19, 77) enthält;
- eine Behandlungseinheit (5) nach einem der Ansprüche 1 bis 9, wobei die Gaszirkulationsleitung (9) mit dem Innenvolumen des Raumes (3) fluidisch verbunden ist.

## Claims

1. A treatment assembly, the assembly (5) comprising:
- an evaporation device (7) including a gas circulation conduit (9), and a material with a large specific surface (11) filling an evaporation section (13) of the circulation conduit (9);
- a device (15) for circulating the gas through the circulation conduit (9);
- a liquid impregnating the material with a large specific surface (11),
**characterized in that** the liquid containing at least one volatile biocide and/or phytoprotective product or a mixture of volatile biocide and/or phytoprotective products, with a boiling temperature comprised between 130 and 280°C at atmospheric pressure, the material with a large specific surface having a liquid retention capacity greater than 50 L/m³ of material with a large specific surface at 20°C;
- a recharging device (17), arranged to re-impregnate the material with a large specific surface (11) with liquid or to replace the spent material with a large specific surface (11) with a new material with a large specific surface (11) impregnated with liquid.

2. The assembly according to claim 1, wherein at least one of the products is chosen from the list of the following phytoprotective or biocide products:
essential oil; terpene; saturated or unsaturated C6 to C10 short chain alcohol, for example octanol, 2-ethylhexanol; volatile synthetic product, for example hexanal, 1,4-dimethylnaphtalene and 3-decene-2-one; liquid organic acids with a high boiling point, such as pelargonic acid and parabenic acid; esters with biocide activity, for example isoamyl isovalerate.

3. The assembly according to claim 1 or 2, wherein the evaporation device (7) is a vertical axis tower, the evaporation section (13) having a vertical axis and preferably having a horizontal section smaller than 75% of the horizontal section of the tower.

4. The assembly according to claim 1 or 2, wherein the evaporation device (7) is a pipe defining the gas circulation conduit (9).

5. The assembly according to any one of the preceding claims, wherein the material with a large specific surface (11) is an open-cell foam or is a divided mineral material such as vermiculite or perlite.

6. The assembly according to any one of the preceding claims, wherein the material with a large specific surface (11) is arranged in at least two layers (89) positioned one above the other and separated from one another by a space (9), each layer (89) having a thickness smaller than a predetermined limit, for example 100 mm.

7. The assembly according to any one of the preceding claims, wherein the recharging device (17) comprises a tub (29) filled with liquid, and a mechanism (31) arranged to remove the material with a large specific surface (11) from the evaporation section (13) of the circulation conduit (9), plunge it in the tub (29) and return it to its place in the evaporation section (13) of the circulation conduit (9), the evaporation device (7) being preferably a vertical axis tower, the evaporation section (13) having preferably a vertical axis, the tub (29) being preferably placed in the tower, the evaporation section (13) being preferably delimited between the tub (29) and the wall of the tower.

8. The assembly according to any one of claims 1 to 7, wherein the recharging device (17) comprises a nebulization device (63), injecting the liquid in the form of droplets into the gas upstream from the material with a large specific surface (11), preferably at a temperature below 50°C.

9. The assembly according to any one of claims 1 to 6, wherein the recharging device (17) comprises a reserve (83) containing liquid, a liquid distributor (85), and a liquid circulation member (87) suctioning the liquid in the reserve (83) and discharging the liquid into the liquid distributor (85), the liquid distributor (85) being arranged to spray the liquid on or in the material with a large specific surface (11).

10. A treatment method, the method comprising the following steps:
- circulating a gas through a circulation conduit (9), a material with a large specific surface (11) filling an evaporation section (13) of the circulation conduit (9), a liquid impregnating the material with a large specific surface (11), **characterized in that** the liquid containing at least one volatile biocide and/or phytoprotective product or a mixture of volatile biocide and/or phytoprotective products, with a boiling temperature comprised between 130 and 280°C at atmospheric pressure, the material with a large specific surface having a liquid retention capacity greater than 50 L/m³ of material with a large specific surface at 20°C;
- when the material with a large specific surface (11) is spent in liquid, recharging, by reimpregnating the material with a large specific surface (11) with liquid, or replacing the spent material with a large specific surface (11) with a new material with a large specific surface (11) impregnated with liquid.

11. The method according to claim 10, wherein the re-impregnation of the material with a large specific surface (11) is done by spraying liquid on or in the material with a large specific surface (11), from a liquid reserve (83).

12. The method according to claim 10, wherein the recharging is done by disassembling the evaporation section (13) containing the material with a spent large specific surface (11), replacing the material with a spent large specific surface (11) with a new material with a large specific surface (11) impregnated with liquid, and remounting the evaporation section (13) containing a new material with a large specific surface (11) impregnated with liquid.

13. The method according to claim 10, wherein the recharging is done by disassembling the evaporation section (13) containing the material with a spent large specific surface (11), and remounting a new evaporation section (13) containing a new material with a large specific surface (11) impregnated with liquid.

14. The method according to any one of claims 10 to 13, wherein the gas charged with vaporized liquid leaving the circulation conduit (9) is injected into a site (3), containing plant products (19, 77).

15. A storage or growing assembly (11) for plant products, comprising:
- a site (3), containing plant products (19, 77);
- a treatment assembly (5) according to any one of claims 1 to 9, the gas circulation conduit (9) being fluidly connected to the inner volume of the site (3).
